# FASCICULE DE BREVET EUROPEEN

(11) **EP 1 366 370 B1**
(45) Date de publication et mention de la délivrance du brevet: **19.05.2010**
(21) Numéro de dépôt: 02713004.6
(22) Date de dépôt: 01.03.2002
(51) Int. Cl.: G01P 3/44

(54) **DISPOSITIF DE GALET A ROULEMENT INSTRUMENTE**
ROLLENVORRICHTUNG MIT INSTRUMENTIERTEM WÄLZLAGER
ROLLER DEVICE WITH INSTRUMENTED BALL BEARING

(30) Priorité: 06.03.2001 FR 0103043
(43) Date de publication de la demande: 03.12.2003
(73) Titulaire: Aktiebolaget SKF, 415 50 Göteborg (SE)
(72) Inventeur: LANDRIEVE, Franck, F-37230 Fondettes (FR)
(74) Mandataire: Casalonga, Axel
(86) Numéro de dépôt international: PCT/FR2002/000739
(87) Numéro de publication internationale: WO 2002/071076

(56) Documents cités:
- EP-A- 0 326 454
- DE-A- 4 412 307
- US-A- 4 986 605

## Description

La présente invention concerne le domaine des paliers à roulement, notamment prévus pour des galets ou poulies comportant une partie fixe destinée à être montée sur un support ou un bâti, et une partie tournante destinée à venir en contact avec un élément extérieur tel qu'une courroie, un rail, un tambour, etc. Ledit élément extérieur entraîne en rotation la partie tournante qui est montée à rotation libre sur la partie fixe.

On peut utiliser des galets dans de nombreuses applications. On trouve ainsi des galets tendeurs de courroies destinés à exercer un effort de tension permanent sur une courroie. La partie tournante en contact avec la courroie est constituée par la bague extérieure d'un palier ou par une poulie montée sur ladite bague extérieure.

On peut également utiliser des galets comme organes de guidage de portes d'ascenseurs ou de rampes d'escaliers mécaniques.

De plus en plus, on est amené à gérer le fonctionnement des ensembles mécaniques en mouvement par des systèmes électroniques, ce qui suppose de pouvoir disposer en permanence des informations nécessaires sur les organes en mouvement, notamment le déplacement, la vitesse, l'accélération, etc.

Si on équipe un galet avec un dispositif de détection des paramètres de rotation, on peut en déduire des informations sur les déplacements angulaires ou linéaires des éléments en contact avec la partie tournante du galet. Par exemple, si le galet vient porter sur une main courante d'escalier mécanique, on peut ainsi connaître par l'intermédiaire du galet, la vitesse linéaire de la main courante. De même, en instrumentant des galets de portes d'ascenseurs, on peut obtenir des informations sur le déplacement linéaire des portes, telles que la vitesse, l'accélération ou le déplacement.

Dans les dispositifs de l'art antérieur, les systèmes de détection équipant les galets sont rapportés sur des galets existants et demandent des adaptations complexes et souvent onéreuses.

Le document FR-A-2 626 631 décrit un montage de palier à roulement avec dispositif capteur présentant un encombrement axial important, et comprenant un nombre élevé de pièces, notamment de pièces spécifiques.

L'invention se propose de remédier aux inconvénients de l'art antérieur.

L'invention propose un module pré-assemblé de galet instrumenté que l'utilisateur final n'a plus qu'à monter très simplement sur un support.

Le dispositif de galet à roulement instrumenté, selon un aspect de l'invention, est du type supporté par un élément non tournant et pourvu d'un moyen capteur de paramètres de rotation et d'un moyen codeur. Le roulement et le moyen capteur sont montés de façon rigide sur un élément de fixation apte à coopérer avec un autre organe mécanique en vue de la fixation du dispositif. L'élément de fixation comprend des moyens de solidarisation avec ledit autre organe mécanique, prévus en position centrale. Le moyen codeur est fixé directement sur le roulement.

On pourra prévoir plusieurs dimensions afin de couvrir un grand nombre d'applications. De par la compacité et la simplicité des galets instrumentés, une même dimension conviendra à de nombreuses applications.

Avantageusement, l'élément de fixation possède une surface extérieure cylindrique en contact avec l'alésage d'une bague intérieure du roulement.

Dans un mode de réalisation de l'invention, le roulement comprend une bague intérieure, une bague extérieure, une rangée d'éléments roulants, par exemple des billes, disposés entre les bagues intérieure et extérieure, et une cage de maintien de l'espacement circonférentiel des éléments roulants. En outre, un joint ou un flasque d'étanchéité peut être fixé sur l'une des bagues et venir à proximité ou en contact avec l'autre bague.

Avantageusement, le moyen capteur comprend un corps de support annulaire et au moins un élément capteur. Le corps est disposé en contact avec une face latérale du roulement.

Dans un mode de réalisation de l'invention, l'élément de fixation comprend un trou central traversant apte à recevoir une vis. Le manchon peut être disposé dans l'alésage de la bague intérieure.

Dans un mode de réalisation de l'invention, le manchon comprend une deuxième surface extérieure en contact avec une surface intérieure du moyen capteur, par exemple de son corps de support, et une surface radiale en contact avec une surface radiale de la bague intérieure du roulement. On peut ainsi positionner axialement le manchon et le roulement.

Dans un mode de réalisation de l'invention, l'élément de fixation comprend un moyen de maintien axial du corps de support. Ce moyen de maintien est, de préférence, rigide.

Dans un mode de réalisation de l'invention, le manchon est pourvu d'un alésage lisse ou fileté pour la fixation du dispositif sur un autre organe mécanique. Le manchon est ainsi apte à coopérer avec une vis qui le traverse et qui vient coopérer avec un alésage fileté dudit autre organe mécanique ou venir coopérer avec les filets formés dans l'alésage du manchon.

Dans un mode de réalisation de l'invention, l'élément de fixation et le corps de support forment une seule pièce qui peut avantageusement être réalisée en matériau synthétique rigide, par exemple chargé de fibres.

Dans un autre mode de réalisation de l'invention, l'élément de fixation et le corps de support forment des pièces distinctes.

Avantageusement, le corps de support est pourvu d'une surface latérale radiale dans laquelle est formée une rainure annulaire comprenant une surface extérieure cylindrique, l'élément capteur affleurant ladite surface extérieure cylindrique.

Dans un mode de réalisation de l'invention, le dispositif comprend un moyen codeur pourvu d'un support et d'une partie active, la partie active étant en saillie par rapport à une face latérale du roulement, le support étant fixé directement sur le roulement. La partie active est disposée radialement au niveau des éléments roulants.

Dans un mode de réalisation de l'invention, le moyen codeur et le moyen capteur sont montés à proximité immédiate d'une face latérale du roulement. Le dispositif est ainsi très compact axialement.

Dans un mode de réalisation de l'invention, l'élément de fixation comprend une surface radiale de montage sur un support, le moyen codeur étant disposé axialement entre ladite surface radiale de montage et le roulement. Le moyen codeur est ainsi bien protégé et on évite qu'il fasse saillie axialement par rapport à la poulie ou au roulement.

L'élément de fixation peut être pourvu d'une portion axiale filetée en saillie par rapport à la surface radiale de montage.

Dans un mode de réalisation de l'invention, le dispositif comprend un roulement supplémentaire monté sur l'élément de fixation. Ceci est bien adapté aux galets larges et/ou soumis à des charges et/ou des couples de dévers élevés. Une entretoise peut être disposée entre les roulements, au niveau de leurs bagues intérieures ou de leurs bagues extérieures. L'entretoise peut être un élément distinct ou être intégrée à la poulie ou à l'élément de fixation. De préférence, le roulement supplémentaire est de type non-instrumenté.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue en coupe axiale d'un palier à roulement monté sur un bâti;

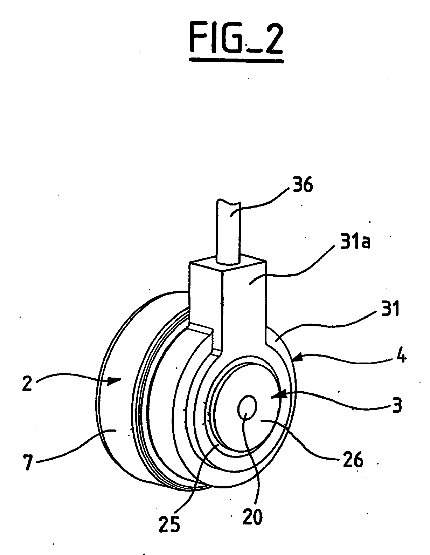

- la figure 2 est une vue en perspective du palier à roulement de la figure 1, non monté sur le bâti;
- la figure 3 est une variante de la figure 1; et
- la figure 4 est une vue en coupe axiale d'un palier à roulement équipé d'une poulie.

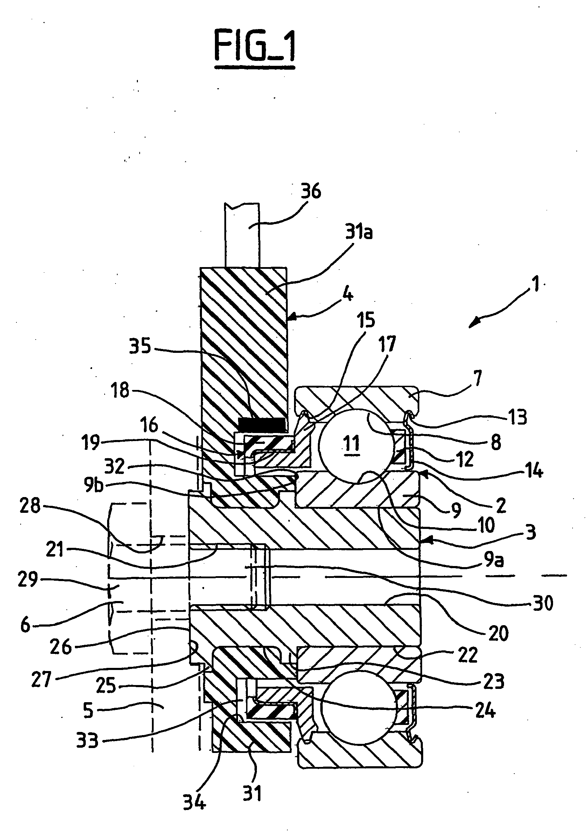

Comme on peut le voir sur la figure 1, le palier à roulement instrumenté référencé 1 dans son ensemble comprend un roulement 2, un élément de fixation 3 et un ensemble capteur 4. Le palier 1 est monté sur un support 5 au moyen d'une vis 6.

Le roulement 2 comprend une bague extérieure tournante 7 pourvue d'un chemin de roulement 8 sur son alésage, une bague intérieure 9 pourvue d'un chemin de roulement 10 sur sa surface extérieure, une rangée d'éléments roulants 11, ici des billes, disposés entre les chemins de roulement 8 et 10 des bagues extérieure 7 et intérieure 9, et une cage 12 de maintien de l'espacement circonférentiel des éléments roulants 11. La cage 12 peut être réalisée en matériau synthétique. Les bagues 7 et 9 du roulement 2 sont de type massif, réalisées par usinage mais pourraient également être réalisées en tôle emboutie. La bague extérieure 7 est pourvue sur son alésage, à proximité de l'une de ses surfaces latérales, d'une rainure annulaire 13. Un flasque d'étanchéité 14 est monté dans la rainure 13 et possède une extrémité libre qui s'étend jusqu'à proximité de la surface cylindrique extérieure de la bague intérieure 9.

Dans le mode de réalisation représenté, la bague extérieure 7 est tournante et la bague intérieure 9 est non tournante. Toutefois, on pourrait parfaitement prévoir la disposition inverse.

Une rainure 15 est formée dans la bague extérieure 7 de façon symétrique à la rainure 13 par rapport à un plan passant par le centre des éléments roulants 11.

Un ensemble codeur 16 est monté solidaire de la bague extérieure 7. L'ensemble codeur 16 comprend un support 17 de forme annulaire à section en L avec une partie radiale dont l'extrémité libre est montée dans la rainure 15 et une partie tubulaire s'étendant à partir de l'extrémité intérieure de la partie radiale en direction opposée aux éléments roulants 11, en d'autres termes vers l'extérieur du roulement 2. Le support 17 peut réalisé en métal, par exemple en alliage léger, et être emmanché sur la bague extérieure 7.

L'ensemble codeur 16 comprend, en outre, une partie active 18 montée sur la surface extérieure de la partie tubulaire du support 17, et formée par exemple en élastoferrite, c'est-à-dire d'un mélange à base de nitrile et de particules de ferrite magnétisées. Une armature 19, par exemple en tôle mince, supporte la partie active 18 qui est surmoulée dessus. L'armature 19 est emmanchée sur la partie tubulaire du support 17. L'ensemble codeur 16 fait saillie axialement du roulement 2 en direction du support 5.

L'élément de fixation 3 est de forme générale annulaire, ici en forme de manchon. L'élément de fixation 3 comprend un alésage 20 pourvu d'une portion filetée 21 à l'une de ses extrémités, et une surface extérieure présentant une première portion 22 cylindrique disposée axialement du côté opposé à la portion filetée 21 de l'alésage 20, puis une nervure annulaire 23, puis une deuxième portion cylindrique 24, puis une nervure annulaire 25 disposée axialement du côté de la portion filetée 21 de l'alésage 20. Les deux extrémités de l'alésage 20 sont ouvertes.

L'élément de fixation 3 est monté dans l'alésage 9a de la bague intérieure 9 du roulement 2 avec la première portion cylindrique 22 en contact avec l'alésage 9a et la nervure 23 en contact avec une surface radiale 9b de la bague intérieure 9. On peut prévoir un montage légèrement serré de la bague intérieure 9 et de l'élément de fixation 3 pour les maintenir ensemble par emmanchement.

Enfin, l'élément de fixation 3 est pourvu d'une surface radiale d'extrémité 26 du côté de la portion filetée 21 de l'alésage 20. La surface radiale 26, axialement décalée vers l'extérieur par rapport au corps de support, est en contact avec une surface 27 en forme de disque appartenant au support 5, formée légèrement en creux par rapport au reste du support 5, de façon que l'élément de fixation 3 soit positionné radialement par rapport audit support 5. Le support 5 est pourvu d'un trou traversant 28 aligné avec l'alésage 20 et de diamètre supérieur ou égal à ce dernier. La vis 6 est pourvue d'une tête 29 disposée en contact avec le support 5 du côté opposé au palier 1 et d'un corps 30 de surface extérieure filetée traversant le trou 28 et venant en prise avec la portion filetée 21 de l'alésage 20 de l'élément de fixation 3.

L'ensemble capteur 4 comprend un corps de support 31, par exemple réalisé en matériau synthétique, présentant une forme générale annulaire avec une surface intérieure venant en contact avec la deuxième portion cylindrique 24 et les nervures 23 et 25 de l'élément de fixation 3. Le corps de support 31 est en concordance de forme avec ladite portion cylindrique 24 et lesdites nervures 23 et 25, ce qui garantit le positionnement axial relatif de l'élément de fixation 3 et de l'ensemble codeur 4.

Le corps de support 31 est pourvu d'une surface radiale 32 en contact avec la surface radiale 9b de la bague intérieure 9. Une rainure annulaire 33 est formée dans ledit corps de support 31 à partir de la surface radiale 32 et est donc ouverte du côté du roulement 2, de façon qu'elle soit apte à loger la partie de l'ensemble codeur 16 qui fait saillie axialement par rapport à la surface radiale 9b de la bague intérieure 9. La rainure 33 est pourvue d'une surface extérieure cylindrique 34. Un élément capteur 35 est monté semi noyé dans le corps de support 31 et affleure la surface cylindrique 34, de façon qu'il soit monté en regard de la partie active 18 de l'ensemble codeur 16 et avec un faible entrefer radial par rapport à ladite partie active 18. L'élément capteur 35 est du type magnétosensible, par exemple une sonde à effet Hall. L'élément capteur 35 et la partie active 18 de l'ensemble codeur 16 sont disposés à très faible distance axiale du roulement 2, notamment de la surface radiale 9b de la bague intérieure 9, d'où une excellente compacité.

Le corps de support 31 s'étend ainsi radialement vers l'extérieur à partir de l'élément de fixation 3.

En outre, le corps de support 31 est pourvu d'une excroissance radiale 31a circonférentiellement localisée et formant une sortie de câble pour un câble 36 apte à communiquer un signal électrique issu de l'élément capteur 35 à d'autres éléments non représentés, par exemple une unité électronique de traitement. La longueur axiale du corps de support 31 est prévue de façon qu'un léger espace subsiste entre le support 5 et ledit corps 31. On évite ainsi une déformation dudit corps de support 31.

On comprend que le roulement 2, l'élément de fixation 3 et l'ensemble capteur 4 forment une unité de palier instrumentée ne risquant pas de perdre de pièces et apte à être montée de façon simple et économique sur un support.

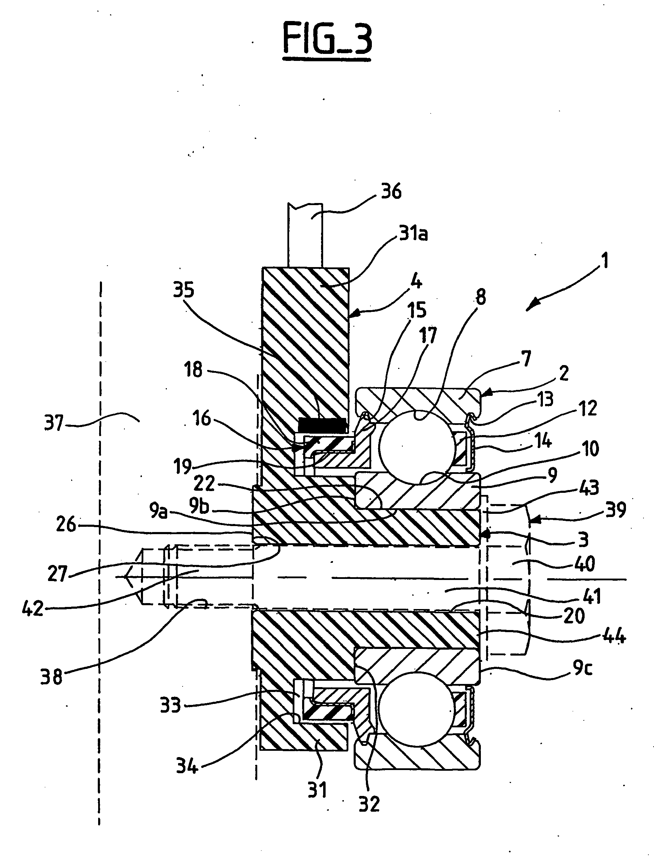

Dans le mode de réalisation de la figure 3, l'élément de fixation et le corps de support sont réalisés de façon monobloc en matériau synthétique, par exemple chargé de fibres. L'alésage 20 de l'élément de fixation est lisse. Le palier à roulement 1 est monté sur un support 37 d'épaisseur supérieure au support 5 du mode de réalisation précédent. Le support 37 est pourvu d'un trou non débouchant 38 fileté. Une vis 39 comprend une tête 40, une partie de corps non filetée 41 et une extrémité filetée 42. La portion de corps non filetée traverse l'alésage 20. La tête 40 est en contact par l'intermédiaire d'une rondelle 43 avec la surface annulaire radiale 44 de l'élément de fixation 3 et avec la surface annulaire radiale 9c de la bague intérieure 9 du roulement 2 opposée à la surface annulaire radiale 9b. Les surfaces 9c et 44 sont coplanaires. L'extrémité filetée 42 de la vis 40 est vissée dans le trou 38.

Ce mode de réalisation présente l'avantage d'un nombre de pièces extrêmement réduit et d'une fixation aisée.

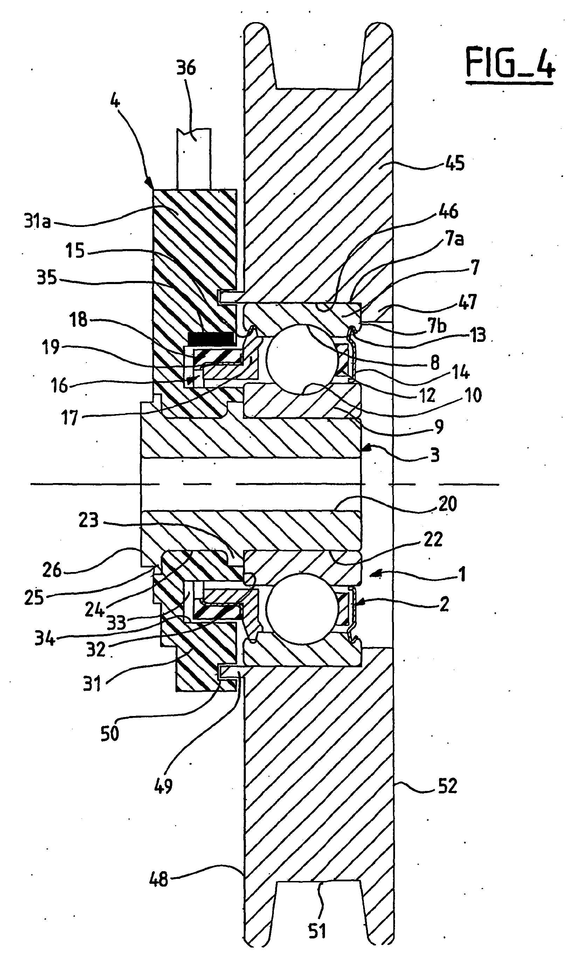

Le mode de réalisation illustré sur la figure 4 est proche de celui de la figure 1, à ceci près qu'une poulie 45 est fixée sur la bague extérieure 7 du roulement 2. Plus précisément, la poulie 45, de forme annulaire, présente un alésage 46 dont une extrémité axiale est pourvue d'une nervure annulaire 47 en saillie vers l'intérieur. L'alésage 46 est emmanché sur la surface extérieure cylindrique 7a de la bague extérieure, tandis que la nervure 47 vient en butée contre la surface radiale 7b de la bague extérieure 7, du côté où se trouve le flasque d'étanchéité 14. Du côté opposé, la poulie 45 présente une surface radiale 48 sensiblement alignée avec la surface radiale d'extrémité 9b de la bague intérieure 9 et la surface correspondante de la bague extérieure 7 et qui laisse subsister un certain espace axial avec le corps de support 31.

La poulie 45 comprend une nervure annulaire 49 en saillie axialement du côté du corps de support 31 et disposée radialement à proximité de la bague extérieure 7 du roulement 2. La nervure 49 peut être alignée avec l'alésage 46 de la poulie 45. La nervure 49 fait saillie dans une rainure correspondante 50 formée dans la surface radiale 32 du corps de support 31. La nervure 49 et la rainure 50 forment une chicane assurant une étanchéité par passage étroit. On améliore ainsi l'étanchéité dont bénéficient le codeur ainsi que le roulement.

La poulie 45 est pourvue sur sa surface extérieure cylindrique d'une gorge 51 apte à coopérer avec une courroie trapézoïdale. La surface radiale 52 de la poulie 45 du côté opposé à la surface radiale 48, est en saillie axialement par rapport à la surface radiale 9c de la bague intérieure 9 et par rapport à la surface radiale 7b de la bague extérieure 7. On peut ainsi prévoir que la tête d'une vis disposée dans l'alésage 20 de l'élément de fixation 3 et disposée dans le même sens que la vis 40 du mode de réalisation de la figure 3 affleure ladite surface radiale 52 de la poulie 45 ou soit en léger retrait, ce qui évite de créer des aspérités.

La poulie 45 peut être emmanchée sur la bague extérieure 7 du roulement 2 et/ou collée.

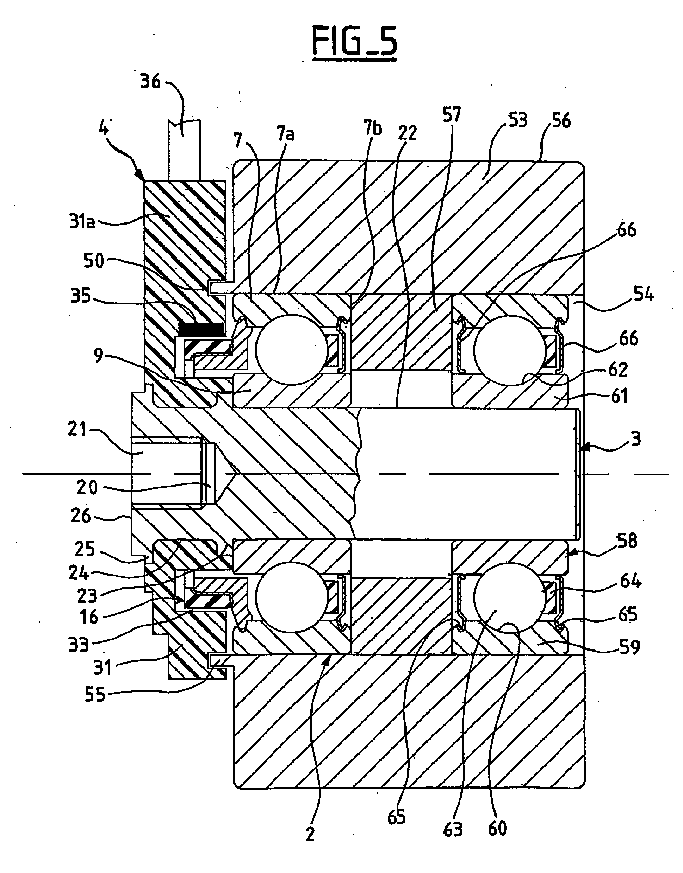

Dans le mode de réalisation illustré sur la figure 5, le galet à roulement comprend un roulement 2 identique à celui illustré sur la figure 1, un élément de fixation 3, un ensemble capteur 4 semblable à celui illustré sur la figure 1, une poulie 53 et un roulement supplémentaire 58. L'élément de fixation 3 est semblable à celui illustré sur la figure 1 à ceci près qu'il est pourvu d'un trou axial borgne 20 pourvu d'une portion filetée 21 et que la première portion cylindrique 22 de sa surface extérieure se prolonge à l'opposé du trou borgne 20. L'élément de fixation 3 se présente donc sous la forme d'un axe pourvu d'un trou borgne fileté à l'une de ses extrémités axiales.

La poulie 53 comprend un alésage 54 en contact avec la surface extérieure cylindrique 7a de la bague extérieure 7 du roulement 2, une surface extérieure cylindrique 56 sur laquelle une courroie ou équivalent peut venir en contact et une excroissance axiale annulaire 55 située dans le prolongement de l'alésage 54 et faisant saillie par rapport à la surface frontale radiale de la poulie 53 adjacente à l'ensemble capteur 4. L'excroissance axiale annulaire 55 fait saillie axialement dans une rainure annulaire correspondante 50 du corps de support 31.

L'entretoise 57 est de forme annulaire à section parallélépipédique présentant une surface extérieure cylindrique en contact avec l'alésage 54 de la poulie 53, une surface radiale en contact avec la surface radiale 7b de la bague extérieure 7 du roulement 2 et une surface radiale opposée ainsi qu'un alésage présentant un diamètre supérieur à celui de la portion de la portion cylindrique 22 de l'élément de fixation 3. Le diamètre de l'alésage de l'entretoise 57 est sensiblement égal au diamètre de la portée cylindrique extérieure de la bague intérieure 9 du roulement 2 et peut ainsi participer à l'étanchéité dudit roulement 2 en formant un passage étroit avec ladite bague intérieure 9.

Le roulement 58 comprend une bague extérieure tournante 59 pourvue d'un chemin de roulement 60 sur son alésage, une bague intérieure 61 pourvue d'un chemin de roulement 62 sur sa surface extérieure, une rangée d'éléments roulants 63, ici des billes, disposés entre les chemins de roulements 60 et 62 des bagues extérieure 59 et intérieure 61, et une cage 64 de maintien de l'espacement circonférentiel des éléments roulants 63. La cage 64 peut être réalisée en matériau synthétique ou en tôle. Les bagues 59 et 61 du roulement 58 sont de type massif, réalisées par usinage mais pourraient également être réalisées en tôle emboutie. La bague extérieure 59 est pourvue sur son alésage, de part et d'autre du chemin de roulement 60, à proximité de ses surfaces latérales radiales, de rainures annulaires 65. Des flasques d'étanchéité 66 sont montés dans les rainures 65 et possèdent chacun une extrémité libre qui s'étend jusqu'à proximité de la surface cylindrique extérieure de la bague intérieure 61.

La surface extérieure cylindrique de la bague extérieure 59 est en contact avec l'alésage 54 de la poulie 56, par exemple par emmanchement serré. L'une des surfaces latérales radiales de la bague extérieure 59 est en contact avec l'entretoise 57 du côté opposé au roulement 2. La bague intérieure 61 est montée sur la portion cylindrique 22 de l'élément de fixation 3, par exemple par emmanchement serré. L'extrémité axiale de l'élément de fixation 3 est très légère saillie par rapport à la surface latérale du roulement 58 du côté opposé au roulement 2 tandis que l'extrémité axiale de la poulie 53 est légèrement en saillie par rapport à cette même surface latérale du roulement 58.

Ce mode de réalisation est particulièrement bien adapté aux applications nécessitant une poulie de grande largeur ce qui se traduit en général par des couples de dévers relativement élevés. En outre, la présence de deux roulements dans le galet permet de supporter des charges radiales importantes. La fixation du galet à roulement peut s'effectuer comme dans les autres modes de réalisation par l'intermédiaire de l'élément de fixation 3, par exemple avec une vis venant en engagement dans le trou fileté 20. Pour des raisons d'économie, le roulement 58 peut être de type conventionnel, c'est à dire assurant la seule fonction de palier.

On pourrait, sans sortir du cadre de l'invention, prévoir que l'élément de fixation ne comporte pas de trou lisse ou fileté dans sa partie centrale mais soit pourvu, à son extrémité destinée à être montée sur un support, d'une partie axiale filetée disposée sur l'axe du dispositif en saillie par rapport à la surface radiale de montage. Ladite partie axiale filetée est apte à coopérer avec un perçage fileté du support ou avec un écrou.

On comprend que le corps de support du capteur et la bague intérieure du roulement sont liés de façon rigide sur l'élément de fixation et qu'il ne peut y avoir aucun mouvement relatif entre ces deux pièces.

On obtient ainsi de façon simple et économique un galet instrumenté extrêmement compact, que l'utilisateur n'a plus qu'à installer par une simple vis ou par une vis et un écrou. Il suffit ensuite de connecter le galet à un dispositif de traitement du signal pour que le dispositif soit opérationnel.

## Revendications

1. Dispositif de galet à roulement du type instrumenté supporté par un élément non tournant et pourvu d'un moyen capteur de paramètres de rotation et d'un moyen codeur, **caractérisé par le fait que** le roulement (2) et le moyen capteur (4) sont montés de façon rigide sur un même élément de fixation (3) apte à coopérer avec un autre organe mécanique en vue de la fixation du dispositif, ledit élément de fixation comprenant des moyens de solidarisation avec ledit autre organe mécanique en position centrale, et le moyen codeur est fixé directement sur le roulement.

2. Dispositif selon la revendication 1, **caractérisé par le fait que** l'élément de fixation possède une surface extérieure cylindrique (22) en contact avec l'alésage (9a) d'une bague intérieure (9) du roulement.

3. Dispositif selon la revendication 1 ou 2, **caractérisé par le fait que** le moyen capteur comprend un corps de support annulaire (31) et au moins un élément capteur (35), ledit corps étant disposé en contact avec une face latérale du roulement.

4. Dispositif selon l'une quelconque des revendications précédentes, **caractérisé par le fait que** l'élément de fixation comprend un trou central traversant apte à recevoir une vis.

5. Dispositif selon la revendication 4, **caractérisé par le fait que** le manchon comprend une deuxième surface extérieure en contact avec une surface intérieure du moyen capteur et une surface radiale en contact avec une surface radiale de la bague intérieure du roulement.

6. Dispositif selon la revendication 4 ou 5, **caractérisé par le fait que** l'élément de fixation est pourvu d'un alésage lisse ou fileté pour la fixation du dispositif sur un autre organe mécanique.

7. Dispositif selon l'une des revendications 1 à 4, **caractérisé par le fait que** l'élément de fixation et le corps de support forment une seule pièce.

8. Dispositif selon l'une quelconque des revendications précédentes, **caractérisé par le fait que** le corps de support est pourvu d'une surface latérale radiale (32) dans laquelle est formée une rainure annulaire (34) comprenant une surface extérieure cylindrique, l'élément capteur affleurant ladite surface extérieure cylindrique.

9. Dispositif selon l'une quelconque des revendications précédentes, **caractérisé par le fait que** le moyen codeur (16) est pourvu d'un support et d'une partie active, la partie active étant en saillie par rapport à une face latérale du roulement, le support étant fixé directement sur le roulement, la partie active étant disposée radialement au niveau des éléments roulants.

10. Dispositif selon l'une quelconque des revendications précédentes, **caractérisé par le fait que** le moyen codeur et le moyen capteur sont montés à proximité immédiate d'une face latérale du roulement.

11. Dispositif selon l'une quelconque des revendications précédentes, **caractérisé par le fait que** l'élément de fixation comprend une surface radiale de montage sur un support, le moyen codeur étant disposé axialement entre ladite surface radiale de montage et le roulement.

12. Dispositif suivant l'une quelconque des revendications 1 à 3, **caractérisé par le fait que** l'élément de fixation est pourvu d'une portion axiale filetée en saillie par rapport à une surface radiale de montage.

13. Dispositif selon l'une quelconque des revendications précédentes, **caractérisé par le fait qu'**il comprend un roulement supplémentaire monté sur l'élément de fixation.

14. Dispositif selon la revendication 13, **caractérisé par le fait qu'**une entretoise est disposée entre les deux roulements.

15. Dispositif selon la revendication 13 ou 14, **caractérisé par le fait que** le roulement supplémentaire est de type non instrumenté.

## Claims

1. Roller device with rolling bearing of the instrumented type supported by a non-rotating element and provided with a sensor means for sensing rotation parameters and with an encoder means, **characterized in that** the bearing (2) and the sensor means (4) are mounted rigidly on one and the same fixing element (3) able to collaborate with another mechanical member with a view to fixing the device, said fixing element comprising means of securing to said other mechanical member in a central position, and the encoder means is fixed directly to the bearing.

2. Device according to Claim 1, **characterized in that** the fixing element has a cylindrical outer surface (22) in contact with the bore (9a) of an inner ring (9) of the rolling bearing.

3. Device according to Claim 1 or 2, **characterized in that** the sensor means comprises an annular support body (31) and at least one sensor element (35), said body being arranged in contact with a lateral face of the rolling bearing.

4. Device according to any one of the preceding claims, **characterized in that** the fixing element comprises a central through-hole able to take a screw.

5. Device according to Claim 4, **characterized in that** the sleeve tube comprises an outer second surface in contact with an inner surface of the sensor means and a radial surface in contact with a radial surface of the inner ring of the rolling bearing.

6. Device according to Claim 4 or 5, **characterized in that** the fixing element is provided with a plain or threaded bore for fixing the device to another mechanical member.

7. Device according to one of Claims 1 to 4, **characterized in that** the fixing element and the support body form one single piece.

8. Device according to any one of the preceding claims, **characterized in that** the support body is provided with a radial lateral surface (32) in which there is formed an annular slot (34) comprising a cylindrical outer surface, the sensor element lying flush with said cylindrical outer surface.

9. Device according to any one of the preceding claims, **characterized in that** the encoder means (16) is provided with a support and with an active part, the active part projecting from a lateral face of the rolling bearing, the support being fixed directly to the bearing, the active part being arranged radially at the rolling elements.

10. Device according to any one of the preceding claims, **characterized in that** the encoder means and the sensor means are mounted in close proximity to a lateral face of the rolling bearing.

11. Device according to any one of the preceding claims, **characterized in that** the fixing element comprises a radial surface for mounting on a support, the encoder means being arranged axially between said radial mounting surface and the rolling bearing.

12. Device according to any one of Claims 1 to 3, **characterized in that** the fixing element is provided with a threaded axial portion projecting from a radial mounting surface.

13. Device according to any one of the preceding claims, **characterized in that** it comprises an additional rolling bearing mounted on the fixing element.

14. Device according to Claim 13, **characterized in that** a spacer piece is arranged between the two rolling bearings.

15. Device according to Claim 13 or 14, **characterized in that** the additional rolling bearing is of the uninstrumented type.

## Patentansprüche

1. Laufrollen-Vorrichtung mit instrumentiertem Wälzlager, das von einem nicht-drehenden Element getragen wird und mit einer Sensoreinrichtung für Drehparameter und mit einer Codiereinrichtung versehen ist, **dadurch gekennzeichnet, dass** das Wälzlager (2) und die Sensoreinrichtung (4) starr auf dem gleichen Befestigungselement (3) montiert sind, das mit einem anderen mechanischen Organ zur Befestigung der Vorrichtung zusammenwirken kann, wobei das Befestigungselement Einrichtungen zur festen Verbindung mit dem anderen mechanischen Organ in zentraler Stellung enthält und die Codiereinrichtung direkt auf dem Wälzlager befestigt ist.

2. Vorrichtung nach Anspruch 1, **dadurch gekennzeichnet, dass** das Befestigungselement eine zylindrische Außenfläche (22) in Kontakt mit der Bohrung (9a) eines Innenrings (9) des Wälzlagers besitzt.

3. Vorrichtung nach Anspruch 1 oder 2, **dadurch gekennzeichnet, dass** die Sensoreinrichtung einen ringförmigen Trägerkörper (31) und mindestens ein Sensorelement (35) enthält, wobei der Körper in Kontakt mit einer Seitenfläche des Wälzlagers angeordnet ist.

4. Vorrichtung nach einem der vorhergehenden Ansprüche, **dadurch gekennzeichnet, dass** das Befestigungselement ein zentrales Durchgangsloch enthält, das eine Schraube aufnehmen kann.

5. Vorrichtung nach Anspruch 4, **dadurch gekennzeichnet, dass** die Muffe eine zweite Außenfläche in Kontakt mit einer Innenfläche der Sensoreinrichtung und eine radiale Fläche in Kontakt mit einer radialen Fläche des Innenrings des Wälzlagers enthält.

6. Vorrichtung nach Anspruch 4 oder 5, **dadurch gekennzeichnet, dass** das Befestigungselement mit einer glatten oder mit Gewinde versehenen Bohrung zur Befestigung der Vorrichtung auf einem anderen mechanischen Organ versehen ist.

7. Vorrichtung nach einem der Ansprüche 1 bis 4, **dadurch gekennzeichnet, dass** das Befestigungselement und der Trägerkörper aus einem Stück sind.

8. Vorrichtung nach einem der vorhergehenden Ansprüche, **dadurch gekennzeichnet, dass** der Trägerkörper mit einer radialen Seitenfläche (32) versehen ist, in der eine Ringnut (34) geformt ist, die eine zylindrische Außenfläche aufweist, wobei das Sensorelement die zylindrische Außenfläche berührt.

9. Vorrichtung nach einem der vorhergehenden Ansprüche, **dadurch gekennzeichnet, dass** die Codiereinrichtung (16) mit einem Träger mit einem aktiven Bereich versehen ist, wobei der aktive Bereich bezüglich einer Seitenfläche des Wälzlagers vorsteht, wobei der Träger direkt am Wälzlager befestigt ist, wobei der aktive Bereich radial in Höhe der rollenden Elemente angeordnet ist.

10. Vorrichtung nach einem der vorhergehenden Ansprüche, **dadurch gekennzeichnet, dass** die Codiereinrichtung und die Sensoreinrichtung in direkter Nähe einer Seitenfläche des Wälzlagers montiert sind.

11. Vorrichtung nach einem der vorhergehenden Ansprüche, **dadurch gekennzeichnet, dass** das Befestigungselement eine radiale Fläche zur Montage auf einen Träger enthält, wobei die Codiereinrichtung axial zwischen der radialen Montagefläche und dem Wälzlager angeordnet ist.

12. Vorrichtung nach einem der Ansprüche 1 bis 3, **dadurch gekennzeichnet, dass** das Befestigungselement mit einem axialen Gewindeabschnitt versehen ist, der bezüglich einer radialen Montagefläche vorsteht.

13. Vorrichtung nach einem der vorhergehenden Ansprüche, **dadurch gekennzeichnet, dass** sie ein zusätzliches Wälzlager enthält, das auf das Befestigungselement montiert ist.

14. Vorrichtung nach Anspruch 13, **dadurch gekennzeichnet, dass** ein Abstandshalter zwischen den zwei Wälzlagern angeordnet ist.

15. Vorrichtung nach Anspruch 13 oder 14, **dadurch gekennzeichnet, dass** das zusätzliche Wälzlager vom nicht-instrumentierten Typ ist.
